# EUROPEAN PATENT APPLICATION

(11) **EP 4 614 102 A1**
(43) Date of publication of application: **10.09.2025**
(21) Application number: 25162015.9
(22) Date of filing: 06.03.2025
(51) Int. Cl.: F28D 20/02, H01M 10/65

(54) **HEAT EXCHANGE DEVICE, BATTERY ASSEMBLY, BATTERY PACK, AND ELECTRICAL SYSTEM**

(30) Priority: 06.03.2024 CN 202420434186 U
(71) Applicant: BYD Company Limited, Shenzhen, Guangdong 518118 (CN)
(72) Inventor: SU, Bizhe, Shenzhen, 518118 (CN); XIE, Xunhan, Shenzhen, 518118 (CN); CAI, Yaomin, Shenzhen, 518118 (CN); XIANG, Ying, Shenzhen, 518118 (CN); PENG, Qingbo, Shenzhen, 518118 (CN)
(74) Representative: Mathys & Squire

(57) **Abstract**

The present disclosure discloses a heat exchange device, a battery assembly, a battery pack, and an electrical system. The heat exchange device includes a heat absorbing part and a sealing part. The sealing part is wrapped outside the heat absorbing part. The sealing part has at least one area of weakness. The sealing part is configured to break at a position on the sealing part that is close to the area of weakness when pressure inside the sealing part reaches a preset threshold. An area of one side of the area of weakness that is close to the heat absorbing part being larger than an area of one side of the area of weakness that is away from the heat absorbing part. According to the heat exchange device of the present disclosure, the heat absorbing part can absorb heat of a cell, and the area of weakness facilitates the discharge of gas in the sealing part, so as to facilitate the use of the heat exchange device.

## Description

### FIELD

The present disclosure relates to the technical field of batteries, and specifically to a heat exchange device, a battery assembly, a battery pack, and an electrical system.

### BACKGROUND

A battery assembly generates a large amount of heat during operation, which may cause thermal runaway of cells of the battery assembly, affecting the use of the cells.

In the related art, to suppress the spread of heat during the thermal runaway of the cells, aerogel is generally used. However, the aerogel can only delay the transfer of heat, and cannot effectively absorb a large amount of heat released from the inside of the battery assembly. A heat exchanger with aerogel inside is sandwiched between large surfaces of two adjacent cells. When the cell undergoes a thermal runaway, a large amount of high-temperature gas is generated in the heat exchanger, and the heat exchanger swells and is also squeezed by the cells. Consequently, the heat exchanger may be damaged or deformed.

### SUMMARY

The present disclosure aims to resolve at least one of the technical problems in the related art. Therefore, an objective of the present disclosure is to provide a heat exchange device, in which a heat absorbing part can absorb heat from a cell, and an area of weakness facilitates the discharge of gas in a sealing part, so as to facilitate the use of the heat exchange device.

A second objective of the present disclosure is to provide a battery assembly using the heat exchange device.

A third objective of the present disclosure is to provide a battery pack using the heat exchange device or the battery assembly.

A fourth objective of the present disclosure is to provide an electrical system using the battery pack.

An example of a first aspect of the present disclosure provides a heat exchange device, including: a heat absorbing part; and a sealing part, wrapped outside the heat absorbing part, the sealing part having at least one area of weakness, the sealing part being configured to break at a position on the sealing part that is close to the area of weakness when pressure inside the sealing part reaches a preset threshold, and an area of one side of the area of weakness that is close to the heat absorbing part being larger than an area of one side of the area of weakness that is away from the heat absorbing part.

According to the heat exchange device of the present disclosure, the heat absorbing part vaporizes after absorbing heat, and when the pressure in the sealing part reaches the preset threshold, the gas can break through the side of the area of weakness that is away from the heat absorbing part, so that the gas can be smoothly discharged to the outside of the sealing part, to prevent the explosion of the heat absorbing part or disorderly flowing of the gas inside the accommodating cavity, thereby facilitating normal use of the heat exchange device. Furthermore, with the arrangement of the area of weakness, a discharge passage for the gas can be easily opened under the pressure in the sealing part, so that the gas is preferentially discharged through the area of weakness. In addition, the heat absorbing part absorbs heat from the battery assembly during vaporization, to lower the temperature of the battery assembly, thereby prolonging the service life of the battery assembly. Further, the configuration of the change in the area of the area of weakness from the side that is close to the heat absorbing part to the side that is away from the heat absorbing part facilitates the gas in breaking through the sealing part and improves the smoothness of the gas flow, thereby increasing the speed at which the gas breaks through the sealing part.

According to some examples of the present disclosure, the sealing part includes: a first sealing layer; and a second sealing layer, arranged on one side of the first sealing layer in a thickness direction, where an outer peripheral edge of the second sealing layer is connected to an outer peripheral edge of the first sealing layer to form an accommodating cavity, the heat absorbing part is located in the accommodating cavity, and the area of weakness is defined by the outer peripheral edge of the second sealing layer and the outer peripheral edge of the first sealing layer.

According to some examples of the present disclosure, the area of weakness is in communication with the accommodating cavity; or the area of weakness is separated from the accommodating cavity, and a connection force between the outer peripheral edge of the first sealing layer and the outer peripheral edge of the second sealing layer on a side of the area of weakness facing the heat absorbing part is less than a connection force between the outer peripheral edge of the first sealing layer and the outer peripheral edge of the second sealing layer at remaining portions other than the area of weakness.

According to some examples of the present disclosure, the side of the area of weakness that is close to the heat absorbing part is open and is in communication with the accommodating cavity.

According to some examples of the present disclosure, a connection width between the outer peripheral edge of the second sealing layer and the outer peripheral edge of the first sealing layer at remaining portions other than the area of weakness is defined as *a*, and a minimum distance between the side of the area of weakness that is away from the heat absorbing part and an outer peripheral edge of the sealing part is defined as *b,* where *b* satisfies: 0.2*a*<*b*<0.8*a.*

According to some examples of the present disclosure, a connection width between the outer peripheral edge of the second sealing layer and the outer peripheral edge of the first sealing layer at remaining portions other than the area of weakness is defined as *a*, where a satisfies: 2 mm≤*a*≤10 mm.

According to some examples of the present disclosure, a projection of the area of weakness on the first sealing layer has a first side edge and a second side edge, and a distance between the first side edge and the second side edge gradually decreases from the side of the area of weakness that is close to the heat absorbing part toward the side of the area of weakness that is away from the heat absorbing part.

According to some examples of the present disclosure, one end of the first side edge that is away from the heat absorbing part is connected to one end of the second side edge that is away from the heat absorbing part.

According to some examples of the present disclosure, an inclination angle of the first side edge relative to a corresponding edge of the sealing part is defined as α, where α satisfies: 5°≤α≤60°; and/or an inclination angle of the second side edge relative to the corresponding edge of the sealing part is defined as β, where β satisfies: 5°≤β≤60°.

According to some examples of the present disclosure, the projection of the area of weakness on the first sealing layer is in the shape of a triangle.

According to some examples of the present disclosure, the projection of the area of weakness on the first sealing layer is in the shape of an equilateral triangle.

According to some examples of the present disclosure, the heat absorbing part is a phase change material part.

According to some examples of the present disclosure, the phase change material part is a hydrogel or water.

An example of a second aspect of the present disclosure provides a battery assembly, including: a plurality of cells arranged in sequence; and at least one heat exchange device, the heat exchange device being the heat exchange device according to the example of the first aspect of the present disclosure, and the heat exchange device being arranged between two adjacent cells.

According to some examples of the present disclosure, the area of weakness of the heat exchange device is close to a side of the cell provided with an explosion-proof valve.

A battery pack according to an example of a third aspect of the present disclosure includes the heat exchange device according to the example of the first aspect of the present disclosure or the battery assembly according to the example of the second aspect of the present disclosure.

An electrical system according to an example of a fourth aspect of the present disclosure includes the battery pack according to the example of the third aspect of the present disclosure.

Additional aspects and advantages of the present disclosure will be partly given in and partly apparent from the description below, or understood through practice of the present disclosure.

### BRIEF DESCRIPTION OF THE DRAWINGS

The above and/or other additional aspects and advantages of the present disclosure become apparent and comprehensible from the description of examples in connection with accompanying drawings, in which:
FIG. 1 is a schematic diagram of a heat exchange device according to an example of the present disclosure, where a second sealing layer is not shown; and
FIG. 2 is an enlarged view of part A denoted by a circle in FIG. 1.

In the drawings:
100. heat exchange device;
1. heat absorbing part;
2. sealing part; 21. area of weakness;
211. first side edge; 212. second side edge; 22. first sealing layer.

### DETAILED DESCRIPTION

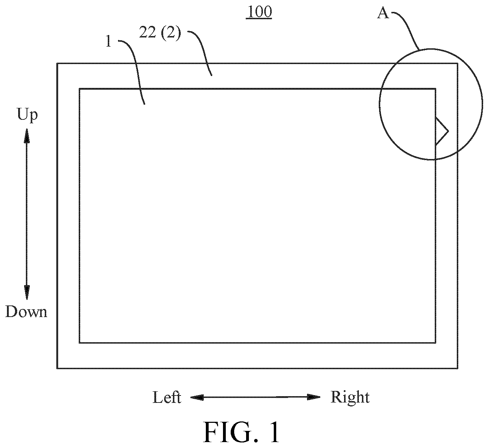

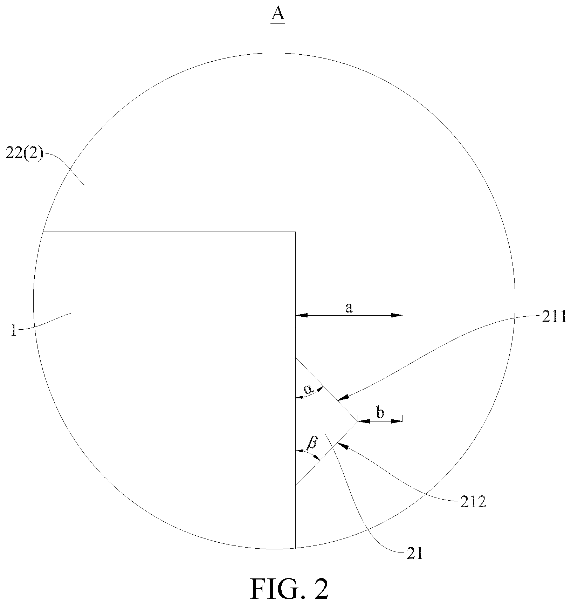

Examples of the present disclosure will be described in detail below. The examples described with reference to the accompanying drawings are merely examples. A heat exchange device 100 according to an example of a first aspect of the present disclosure will be described below with reference to FIG. 1 and FIG. 2. A detailed description is given below using an example where the heat exchange device 100 of the present disclosure is used in a battery assembly.

As shown in FIG. 1 and FIG. 2, the heat exchange device 100 according to the example of the first aspect of the present disclosure includes a heat absorbing part 1 and a sealing part 2.

Specifically, the sealing part 2 is wrapped around the heat absorbing part 1. The sealing part 2 has at least one area of weakness 21. The sealing part 2 is configured to break at a position on the sealing part 2 that is close to the area of weakness 21 when pressure inside the sealing part 2 reaches a preset threshold. An area of one side of the area of weakness 21 that is close to the heat absorbing part 1 is larger than an area of one side of the area of weakness 21 that is away from the heat absorbing part 1.

For example, in the example of FIG. 1 and FIG. 2, when the sealing part 2 is in a sealed state, the heat absorbing part 1 is located inside the sealing part 2, and the inside of the sealing part 2 is not in communication with the outside of the sealing part 2. A cross-sectional area of the side of the area of weakness 21 that is close to the heat absorbing part 1 in a thickness direction (for example, a direction perpendicular to a surface of the sealing part 2 in FIG. 1) is larger than a cross-sectional area of the side of the area of weakness 21 that is away from the heat absorbing part 1 in the thickness direction. When the pressure inside the sealing part 2 reaches the predetermined threshold, the position on the sealing part 2 that is close to the area of weakness 21 breaks to allow the inside of the sealing part 2 to be in communication with the outside of the sealing part 2 through the area of weakness 21. It should be noted that when a thickness of the area of weakness 21 is small and approximately negligible, a length of the side of the area of weakness 21 that is close to the heat absorbing part 1 (for example, a dimension in a vertical direction in FIG. 1) is greater than a length of the side of the area of weakness 21 that is away from the heat absorbing part 1. As shown in FIG. 1, the area of weakness 21 is formed at an edge of a right side of the sealing part 2. Of course, the area of weakness 21 may also be formed at an edge in other directions on the sealing part 2. The sealing part 2 has an accommodating cavity (not shown) therein. The accommodating cavity is configured to accommodate the heat absorbing part 1.

By such a configuration, when the heat exchange device 100 is used in a battery assembly, and a large amount of heat is generated when thermal runaway occurs in a cell of the battery assembly, the heat absorbing part 1 quickly absorbs the heat and vaporizes to generate a large amount of gas. The gas causes a sudden increase in pressure in the sealing part 2. The gas is squeezed into the area of weakness 21. The gas impacts the sealing part 2 on the side of the area of weakness 21 that is away from the heat absorbing part 1. When the pressure in the sealing part 2 reaches a preset threshold (in other words, when the pressure in the area of weakness 21 reaches the preset threshold), the gas breaks through the sealing part 2 on the side of the area of weakness 21 that is away from the heat absorbing part 1, so that the area of weakness 21 is in communication with the outside of the sealing part 2, and further the accommodating cavity of the sealing part 2 is in communication with the outside of the sealing part 2. As such, the gas can be discharged out of the sealing part 2, to facilitate orderly gas discharge of the heat exchange device 100 and prevent the explosion of the heat absorbing part 1 or disorderly flowing of the gas inside the sealing part 2, thereby facilitating the normal use of the heat exchange device 100. Furthermore, with the arrangement of the area of weakness 21, a discharge passage for the gas (i.e., a communication passage between the area of weakness 21 and the outside of the sealing part 2) can be easily opened under pressure, so that the gas is preferentially discharged through the area of weakness 21 to the outside of the sealing part 2. In addition, the heat absorbing part 1 can absorb a large amount of heat in the process of vaporization, thereby helping to absorb heat on the cell of the battery assembly to lower the temperature of the battery assembly, thereby facilitating the long-term normal use of the battery assembly.

Further, the large area of the side of the area of weakness 21 that is close to the heat absorbing part 1 facilitates the flow of the gas in the sealing part 2 to the area of weakness 21. On the one hand, the small area of the side of the area of weakness 21 that is away from the heat absorbing part 1 is advantageous for increasing the pressure on the side of the area of weakness 21 that is away from the heat absorbing part 1, to increase the effect of stress concentration on the side of the area of weakness 21 that is away from the heat absorbing part 1, so that the gas can break through the sealing part 2 and be discharged. On the other hand, the change in the area of the area of weakness 21 from the side that is close to the heat absorbing part 1 to the side that is away from the heat absorbing part 1 provides a guiding effect for the flow of the gas, so that the gas can smoothly flow from the side of the area of weakness 21 that is close to the heat absorbing part 1 to the side of the area of weakness 21 that is away from the heat absorbing part 1, thereby improving the smoothness of the gas flow and increasing the speed at which the gas flow breaks through the sealing part 2.

According to the heat exchange device 100 of the present disclosure, the heat absorbing part 1 vaporizes after absorbing heat, and when the pressure in the sealing part 2 reaches the preset threshold, the gas can break through the side of the area of weakness 21 that is away from the heat absorbing part 1, so that the gas can be smoothly discharged to the outside of the sealing part 2, to prevent the explosion of the heat absorbing part 1 or disorderly flowing of the gas inside the sealing part 2 (i.e., the accommodating cavity), thereby facilitating normal use of the heat exchange device 100. Furthermore, with the arrangement of the area of weakness 21, a discharge passage for the gas can be easily opened under the pressure in the sealing part 2, so that the gas is preferentially discharged through the area of weakness 21. In addition, the heat absorbing part 1 absorbs heat from the battery assembly during vaporization, to lower the temperature of the battery assembly, thereby prolonging the service life of the battery assembly. Further, the configuration of the change in the area of the area of weakness 21 from the side that is close to the heat absorbing part 1 to the side that is away from the heat absorbing part 1 facilitates the gas in breaking through the sealing part 2 and improves the smoothness of the gas flow, thereby increasing the speed at which the gas breaks through the sealing part 2.

According to some examples of the present disclosure, referring to FIG. 1, the sealing part 2 includes a first sealing layer 22 and a second sealing layer (not shown).

Specifically, the second sealing layer is arranged on one side of the first sealing layer 22 in a thickness direction, an outer peripheral edge of the second sealing layer is connected to an outer peripheral edge of the first sealing layer 22 to form the accommodating cavity (not shown), the heat absorbing part 1 is located in the accommodating cavity, and the area of weakness 21 is defined by the outer peripheral edge of the second sealing layer and the outer peripheral edge of the first sealing layer 22.

For example, in the example of FIG. 1, the heat absorbing part 1 is located in a middle region between the first sealing layer 22 and the second sealing layer, the outer peripheral edge of the first sealing layer 22 and the outer peripheral edge of the second sealing layer are connected to form a sealing part 2 which is hollow inside, the heat absorbing part 1 is located in a sealing region (i.e., the accommodating cavity) formed between the first sealing layer 22 and the second sealing layer, the heat absorbing part 1 is located in the accommodating cavity, the sealing part 2 wraps the heat absorbing part 1, the area of weakness 21 is located at the position where the outer peripheral edge of the first sealing layer 22 is connected to the outer peripheral edge of the second sealing layer, and the area of weakness 21 is defined by the outer peripheral edge of the second sealing layer and the outer peripheral edge of the first sealing layer 22 that are not connected to each other. In other words, the outer peripheral edge of the first sealing layer 22 and the outer peripheral edge of the second sealing layer are press-fit connected to each other, and the portion of the first sealing layer 22 and the portion of the second sealing layer at the area of weakness 21 are not connected to each other. A connection width between the outer peripheral edge of the second sealing layer and the outer peripheral edge of the first sealing layer 22 at the area of weakness 21 is less than a connection width between the outer peripheral edge of the second sealing layer and the outer peripheral edge of the first sealing layer 22 at remaining portions other than the area of weakness 21.

By such a configuration, the connection width of the first sealing layer 22 and the second sealing layer on the right side of the area of weakness 21 (i.e., the side of the area of weakness 21 that is away from the heat absorbing part 1) is narrow, so that when the gas pressure in the sealing part 2 reaches the preset threshold, the gas can easily break through the connection between the first sealing layer 22 and the second sealing layer at the area of weakness 21, so as to ensure that the gas can flow out of the sealing part 2 and prevent the explosion of the sealing part 2 or disorderly flowing of the gas in the sealing part 2. In addition, space occupied by the area of weakness 21 in the sealing part 2 is also reduced, so that space in the sealing part 2 for placing the heat absorbing part 1 is increased, i.e., the space of the accommodating cavity is increased. It should be noted that the outer peripheral edge is an edge of the member in a circumferential direction. The description of left and right positions in the present disclosure refers to a left-right direction indicated by an arrow in FIG. 1. For example, the right side of the area of weakness 21 is the side of the area of weakness 21 that is away from the heat absorbing part 1, and the left side of the area of weakness 21 is the side of the area of weakness 21 that is close to the heat absorbing part 1.

According to some optional examples of the present disclosure, the first sealing layer 22 and the second sealing layer are integrally formed. As such, the connection strength between the outer peripheral edge of the first sealing layer 22 and the outer peripheral edge of the second sealing layer is enhanced. It should be noted that the sealing part 2 may be formed by injection molding using a mold having a convex structure, and after the mold is removed, the remaining part forms the sealing part 2. The accommodating cavity and the area of weakness 21 are formed at positions on the convex structure that correspond to the sealing part 2.

According to some examples of the present disclosure, referring to FIG. 1, the area of weakness 21 is in communication with the accommodating cavity, i.e., the inside of the sealing part 2. For example, in the example of FIG. 1, when the sealing part 2 is in a sealed state, the heat absorbing part 1 is located in the accommodating cavity, the accommodating cavity is in communication with the area of weakness 21, and the accommodating cavity is not in communication with the outside of the sealing part 2. By such a configuration, when the heat absorbing part 1 quickly absorbs heat and vaporizes to generate a large amount of gas, the pressure of the gas in the sealing part 2 suddenly increases, and the gas in the accommodating cavity flows to the area of weakness 21, and then breaks through the portion of the sealing part 2 that is close to the area of weakness 21 and flows out. This facilitates the flow of the gas to the area of weakness 21 and improves the smoothness of the flow of the gas between the accommodating cavity and the area of weakness 21, thereby facilitating the normal use of the heat exchange device 100.

According to some other examples of the present disclosure, the area of weakness 21 is separated from the accommodating cavity (not shown), and a connection force between the outer peripheral edge of the first sealing layer 22 and the outer peripheral edge of the second sealing layer on the side of the area of weakness 21 facing the heat absorbing part 1 is less than a connection force between the outer peripheral edge of the first sealing layer 22 and the outer peripheral edge of the second sealing layer at the remaining portions other than the area of weakness 21.

For example, a portion of the first sealing layer 22 and a portion of the second sealing layer that correspond to the side of the area of weakness 21 facing the heat absorbing part 1 are connected to separate the area of weakness 21 from the accommodating cavity. When the pressure of the accommodating cavity, i.e., the inside of the sealing part 2, reaches the predetermined threshold, the gas first breaks through the connection portion between the outer peripheral edge of the first sealing layer 22 and the outer peripheral edge of the second sealing layer on the side of the area of weakness 21 facing the heat absorbing part 1, and then flows into the area of weakness 21 to break through the connection portion between the outer peripheral edge of the first sealing layer 22 and the outer peripheral edge of the second sealing layer on the side of the area of weakness 21 that is away from the heat absorbing part 1. As such, the pressure of the gas flowing to the area of weakness 21 can be buffered, to prevent other parts of the sealing part 2 from being damaged by the high pressure of the gas in the process of the gas breaking through the sealing part 2, thereby improving the recycling rate of the sealing part 2. It should be noted that the area of the area of weakness 21 is a cross-sectional area of the area of weakness 21 in the direction perpendicular to the surface of the sealing part 2. When the area of weakness 21 is in communication with or is separated from the inside of the sealing part 2, the area of the area of weakness 21 is a cross-sectional area in the direction perpendicular to the surface of the sealing part 2 at a position where an outer peripheral edge of the sealing part 2 is not connected.

According to some examples of the present disclosure, referring to FIG. 1, the side of the area of weakness 21 that is close to the heat absorbing part 1 is open and is in communication with the accommodating cavity (i.e., the space in which the heat absorbing part 1 is located). For example, in the example of FIG. 1, the left side of the area of weakness 21 (i.e., the side of the area of weakness 21 that is close to the heat absorbing part 1) is in communication with the accommodating cavity (i.e., the space in which the heat absorbing part 1 is located). By such a configuration, the gas generated by the vaporization of the heat absorbing part 1 can flow from the accommodating cavity to the area of weakness 21, so that the gas flowing to the area of weakness 21 can break through the connection between the first sealing layer 22 and the second sealing layer, thereby reducing the difficulty of gas discharge, facilitating normal use of the heat exchange device 100, and increasing the gas discharge speed of the heat exchange device 100.

According to some examples of the present disclosure, referring to FIG. 1 and FIG. 2, the connection width between the outer peripheral edge of the second sealing layer and the outer peripheral edge of the first sealing layer 22 at the remaining portions other than the area of weakness 21 is defined as *a*, and a minimum distance between the side of the area of weakness 21 that is away from the heat absorbing part 1 and the outer peripheral edge of the sealing part 2 (i.e., an edge of the sealing part 2 in a circumferential direction) is defined as *b,* where *b* satisfies: 0.2*a*<*b*<0.8*a.*

For example, when the minimum distance b between the side of the area of weakness 21 that is away from the heat absorbing part 1 and the outer peripheral edge of the sealing part 2 is less than or equal to 0.2 times the connection width a between the outer peripheral edge of the second sealing layer and the outer peripheral edge of the first sealing layer 22 at the remaining portions other than the area of weakness 21, the minimum distance between the side of the area of weakness 21 that is away from the heat absorbing part 1 and the outer peripheral edge of the sealing part 2 is small, and the minimum connection width between the first sealing layer 22 and the second sealing layer on the right side of the area of weakness 21 (i.e., the side of the area of weakness 21 that is away from the heat absorbing part 1) is narrow. In this case, the gas can break through the connection on the right side of the area of weakness 21 when the pressure in the sealing part 2 does not reach the preset threshold. As a result, the gas flows out of the sealing part 2, affecting the normal use of the heat absorbing part 1, reducing the heat absorbing capacity of the heat absorbing part 1, and making it difficult to cool the battery assembly.

When the minimum distance b between the side of the area of weakness 21 that is away from the heat absorbing part 1 and the outer peripheral edge of the sealing part 2 is greater than or equal to 0.8 times the connection width a between the outer peripheral edge of the second sealing layer and the outer peripheral edge of the first sealing layer 22 at the remaining portions other than the area of weakness 21, the minimum connection width between the first sealing layer 22 and the second sealing layer on the right side of the area of weakness 21 (i.e., the side of the area of weakness 21 that is away from the heat absorbing part 1) is wide. In this case, when the pressure in the sealing part 2 reaches the preset threshold, the gas cannot easily break through the connection between the first sealing layer 22 and the second sealing layer on the right side of the area of weakness 21. As a result, the sealing part 2 is prone to explosion or disorderly flowing of the gas in the sealing part 2, which damages the heat exchange device 100, affecting the normal use of the heat exchange device 100 and the battery assembly.

Therefore, by setting the connection width a between the outer peripheral edge of the second sealing layer and the outer peripheral edge of the first sealing layer 22 at the remaining portions other than the area of weakness 21 and the minimum distance b between the side of the area of weakness 21 that is away from the heat absorbing part 1 and the outer peripheral edge of the sealing part 2 to satisfy 0.2*a*<*b*<0.8*a,* the minimum distance between the side of the area of weakness 21 that is away from the heat absorbing part 1 and the outer peripheral edge of the sealing part 2 is appropriate. This effectively ensures that the gas cannot easily break through the connection between the first sealing layer 22 and the second sealing layer on the right side of the area of weakness 21 (i.e., the side of the area of weakness 21 that is away from the heat absorbing part 1) before the gas pressure in the sealing part 2 reaches the preset threshold, so that the heat absorbing part 1 can continue to be used normally to absorb the heat from the battery assembly, to prevent thermal runaway of the battery assembly and improve the utilization rate of the heat absorbing part 1. This also effectively ensures that the gas can break through the connection between the first sealing layer 22 and the second sealing layer on the right side of the area of weakness 21 when the gas pressure in the sealing part 2 reaches the preset threshold, so that the gas flows out of the sealing part 2, to prevent explosion in the sealing part 2 or disorderly flowing of the gas inside the sealing part 2, thereby facilitating normal use of the heat exchange device 100 and further facilitating the long-term normal use of the battery assembly.

According to some examples of the present disclosure, referring to FIG. 2, the connection width between the outer peripheral edge of the second sealing layer and the outer peripheral edge of the first sealing layer 22 at the remaining portions other than the area of weakness 21 is defined as *a*, where a satisfies: 2 mm≤*a*≤10 mm. For example, when the connection width a between the outer peripheral edge of the second sealing layer and the outer peripheral edge of the first sealing layer 22 at the remaining portions other than the area of weakness 21 is less than 2 mm, the connection width between the outer peripheral edge of the second sealing layer and the outer peripheral edge of the first sealing layer 22 at the remaining portions other than the area of weakness 21 is narrow, which is likely to cause poor connection and sealing between the outer peripheral edge of the second sealing layer and the outer peripheral edge of the first sealing layer 22, reducing the sealing performance of the inside of the sealing part 2, and making the sealing part 2 prone to damage. When the connection width a between the outer peripheral edge of the second sealing layer and the outer peripheral edge of the first sealing layer 22 at the remaining portions other than the area of weakness 21 is greater than 10 mm, the connection width between the outer peripheral edge of the second sealing layer and the outer peripheral edge of the first sealing layer 22 at the remaining portions other than the area of weakness 21 is wide, and the connection width between the first sealing layer 22 and the second sealing layer on the right side of the area of weakness 21 (i.e., the side of the area of weakness 21 that is away from the heat absorbing part 1) is also wide. This reduces the space inside the sealing part 2 and therefore reduces the amount of the heat absorbing part 1 that can be accommodated and the amount of heat absorbed by the heat absorbing part 1, and is not conducive to the heat dissipation of the battery assembly. This also leads to an unnecessary waste of materials, and reduces the material utilization rate of the sealing part 2.

Therefore, by setting the connection width between the outer peripheral edge of the second sealing layer and the outer peripheral edge of the first sealing layer 22 at the remaining portions other than the area of weakness 21 to satisfy 2 mm≤*a*≤10 mm, the connection width between the outer peripheral edge of the second sealing layer and the outer peripheral edge of the first sealing layer 22 at the remaining portions other than the area of weakness 21 is reasonable. This improves the yield of connection and sealing between the second sealing layer and the first sealing layer 22, so that the second sealing layer and the first sealing layer 22 can be connected and sealed to each other in a bubble-free and wrinkle-free manner, thereby improving the sealing performance of the sealing part 2, effectively preventing the heat absorbing part 1 from contact with air outside the sealing part 2, and facilitating the normal use of the heat exchange device 100. This also increases the space inside the sealing part 2, so that the amount of the heat absorbing part 1 that can be accommodated can be increased, to increase the amount of heat absorbed by the heat absorbing part 1, or the usage time of the heat absorbing part 1 can be prolonged, to improve the usage performance of the heat exchange device 100. Furthermore, this avoids the waste of materials of the sealing part 2, thereby improving the material utilization rate of the sealing part 2.

According to some examples of the present disclosure, referring to FIG. 1 and FIG. 2, a projection of the area of weakness 21 on the first sealing layer 22 has a first side edge 211 and a second side edge 212, and a distance between the first side edge 211 and the second side edge 212 gradually decreases from the side of the area of weakness 21 that is close to the heat absorbing part 1 toward the side of the area of weakness 21 that is away from the heat absorbing part 1. For example, in the example of FIG. 1 and FIG. 2, the first side edge 211 and the second side edge 212 extend toward each other in a direction from left to right. That the distance between the first side edge 211 and the second side edge 212 gradually decreases includes the following cases. First, the first side edge 211 extends substantially horizontally in the direction from left to right, and the second side edge 212 extends obliquely upward in the direction from left to right. Second, the first side edge 211 extends obliquely downward in the direction from left to right, and the second side edge 212 extends substantially horizontally in the direction from left to right. Third, the first side edge 211 extends obliquely downward in the direction from left to right, and the second side edge 212 extends obliquely upward in the direction from left to right. In addition, the configuration of the first side edge 211 and the second side edge 212 includes the following cases. First, a right end of the first side edge 211 (i.e., an end of the first side edge 211 that is away from the heat absorbing part 1) is connected to a right end of the second side edge 212 (i.e., an end of the second side edge 212 that is away from the heat absorbing part 1). Second, the right end of the first side edge 211 is not connected to the right end of the second side edge 212.

Therefore, a left region of the area of weakness 21 (i.e., a region of the area of weakness 21 that is close to the heat absorbing part 1) is wide, and a right region of the area of weakness 21 (i.e., a region of the area of weakness 21 that is away from the heat absorbing part 1) is narrow. When the gas passes through the area of weakness 21, the pressure applied to the narrow region of the area of weakness 21 is greater, so the gas can easily break through the connection between the first sealing layer 22 and the second sealing layer from the right side of the area of weakness 21 (i.e., the end of the area of weakness 21 that is away from the heat absorbing part 1). As such, the gas can quickly break through the connection between the first sealing layer 22 and the second sealing layer, thereby improving the usage performance of the heat exchange device 100. It should be noted that the shape of the first side edge 211 and the shape of the second side edge 212 may be a straight line, a wavy line, or a stepped shape, the shape of the first side edge 211 and the shape of the second side edge 212 may be the same or different, and the shape of the first side edge 211 and the shape of the second side edge 212 may be specifically set according to an actual usage situation to better meet the practical use. However, the present disclosure is not limited thereto.

According to some examples of the present disclosure, referring to FIG. 2, one end of the first side edge 211 that is away from the heat absorbing part 1 is connected to one end of the second side edge 212 that is away from the heat absorbing part 1. For example, in the example of FIG. 2, the right end of the first side edge 211 (i.e., the end of the first side edge 211 that is away from the heat absorbing part 1) is connected to the right end of the second side edge 212 (i.e., the end of the second side edge 212 that is away from the heat absorbing part 1). By such a configuration, the right end of the area of weakness 21 (i.e., the end of the area of weakness 21 that is away from the heat absorbing part 1) is in the shape of a sharp angle, which further increases the pressure on the right end of the area of weakness 21, so that the gas is more likely to break through the connection between the first sealing layer 22 and the second sealing layer on the right side of the area of weakness 21. As such, the speed at which the gas breaks through the first sealing layer 22 and the second sealing layer is further increased. It should be noted that only the connection of the end of the first side edge 211 that is away from the heat absorbing part 1 to the end of the second side edge 212 that is away from the heat absorbing part 1 is defined herein, and whether the first side edge 211 and the second side edge 212 extend in a straight line or a curved line is not limited herein.

According to some examples of the present disclosure, referring to FIG. 2, an inclination angle of the first side edge 211 relative to a corresponding edge of the sealing part 2 (i.e., a junction at which the portion of the sealing part 2 formed with the area of weakness 21 is in communication with the inside of the sealing part 2, i.e., a side edge of the area of weakness 21 corresponding to the first sealing layer 22 and the second sealing layer facing the heat absorbing part 1) is defined as α, where α satisfies: 5°≤α≤60°. For example, in the example of FIG. 2, the first side edge 211 extends obliquely in the left-right direction, the edge of the sealing part 2 corresponding to the area of weakness 21 extends in the vertical direction, and an angle between the first side edge 211 and the edge of the sealing part 2 corresponding to the area of weakness 21 is α.

When the inclination angle α of the first side edge 211 relative to the corresponding edge of the sealing part 2 is less than 5°, the inclination angle of the first side edge 211 is small, and the first side edge 211 is substantially flush with a right side edge of the outer peripheral edge of the sealing part 2 (i.e., the side of the sealing part 2 on which the area of weakness 21 is provided), i.e., a distance between the right end of the first side edge 211 (i.e., the end of the first side edge 211 that is away from the heat absorbing part 1) and a right side edge of the outer peripheral edge of the sealing part 2 is large, so that the gas does not easily break through the connection between the first sealing layer 22 and the second sealing layer at the area of weakness 21. When the inclination angle α of the first side edge 211 relative to the corresponding edge of the sealing part 2 is greater than 60°, the inclination angle of the first side edge 211 is large, the distance between the right end of the first side edge 211 and the right side edge of the outer peripheral edge of the sealing part 2 is small, and a force required for gas to break through the connection between the first sealing layer 22 and the second sealing layer on the right side of the area of weakness 21 (i.e., the side of the area of weakness 21 that is away from the heat absorbing part 1) is small. As a result, the gas can break through the connection between the first sealing layer 22 and the second sealing layer at the area of weakness 21 when the gas pressure in the sealing part 2 does not reach the preset threshold, which is not conducive to the normal use of the heat absorbing part 1.

Therefore, by setting the inclination angle α of the first side edge 211 relative to the corresponding edge of the sealing part 2 to satisfy 5°≤α≤60°, the inclination angle of the first side edge 211 is reasonably set, so that the distance between the right end of the first side edge 211 (i.e., the end of the first side edge 211 that is away from the heat absorbing part 1) and the right side of the outer peripheral edge of the first sealing layer 22 (i.e., the side of the first sealing layer 22 provided with the area of weakness 21) is reasonably set. This effectively ensures that the gas can break through the connection between the first sealing layer 22 and the second sealing layer at the area of weakness 21 when the pressure inside the sealing part 2 reaches the predetermined threshold, so that the heat exchange device 100 can be used normally.

According to some other examples of the present disclosure, referring to FIG. 2, an inclination angle of the second side edge 212 with respect to the corresponding edge of the sealing part 2 (i.e., the junction at which the portion of the sealing part 2 formed with the area of weakness 21 is in communication with the inside of the sealing part 2, i.e., the side edge of the area of weakness 21 corresponding to the first sealing layer 22 and the second sealing layer facing the heat absorbing part 1) is defined as β, where β satisfies: 5°≤β≤60°.For example, in the example of FIG. 2, the second side edge 212 extends obliquely away from the sealing part 2 in the left-right direction, the edge of the sealing part 2 corresponding to the area of weakness 21 extends in the vertical direction, and an angle between the second side edge 212 and the edge of the sealing part 2 corresponding to the area of weakness 21 is β.

When the inclination angle β of the second side edge 212 relative to the corresponding edge of the sealing part 2 is less than 5°, the inclination angle of the second side edge 212 is small, and the second side edge 212 is substantially flush with a right side edge of the outer peripheral edge of the sealing part 2 (i.e., the side of the sealing part 2 on which the area of weakness 21 is formed), i.e., a distance between the right end of the second side edge 212 (i.e., the end of the second side edge 212 that is away from the heat absorbing part 1) and a right side edge of the outer peripheral edge of the sealing part 2 is large, so that the gas does not easily break through the connection between the second sealing layer and the first sealing layer 22 at the area of weakness 21. When the inclination angle β of the second side edge 212 relative to the corresponding edge of the sealing part 2 is greater than 60°, the inclination angle of the second side edge 212 is large, the distance between the right end of the second side edge 212 and the right side edge of the outer peripheral edge of the sealing part 2 is small, and a force required for gas to break through the connection between the second sealing layer and the first sealing layer 22 on the right side of the area of weakness 21 (i.e., the side of the area of weakness 21 that is away from the heat absorbing part 1) is small. As a result, the gas can break through the connection between the second sealing layer and the first sealing layer 22 at the area of weakness 21 when the gas pressure in the sealing part 2 does not reach the preset threshold, which is not conducive to the normal use of the heat absorbing part 1.

Therefore, by setting the inclination angle β of the second side edge 212 relative to the corresponding edge of the sealing part 2 to satisfy 5°≤β≤60°, the inclination angle of the second side edge 212 is reasonably set, so that the distance between the right end of the second side edge 212 (i.e., the end of the second side edge 212 that is away from the heat absorbing part 1) and the right side of the outer peripheral edge of the first sealing layer 22 (i.e., the side of the first sealing layer 22 formed with the area of weakness 21) is reasonably set. This effectively ensures that the gas can break through the connection between the first sealing layer 22 and the second sealing layer at the area of weakness 21 when the pressure inside the sealing part 2 reaches the predetermined threshold, so that the heat exchange device 100 can be used normally.

According to some other examples of the present disclosure, referring to FIG. 2, an inclination angle of the first side edge 211 relative to the corresponding edge of the sealing part 2 is defined as α, and an inclination angle of the second side edge 212 relative to the corresponding edge of the sealing part 2 is defined as β, where α and β satisfy: 5°≤α≤60° and 5°≤β≤60°.Therefore, by setting the inclination angle α of the first side edge 211 relative to the corresponding edge of the sealing part 2 and the inclination angle β of the second side edge 212 relative to the corresponding edge of the sealing part 2 to respectively satisfy 5°≤α≤60° and 5°≤β≤60°, the inclination angle of the first side edge 211 and the inclination angle of the second side edge 212 are reasonably set, so that the distance between the right end of the first side edge 211 (i.e., the end of the first side edge 211 that is away from the heat absorbing part 1) and the right side of the outer peripheral edge of the first sealing layer 22 (i.e., the side of the first sealing layer 22 provided with the area of weakness 21) is reasonably set, and the distance between the right end of the second side edge 212 (i.e., the end of the second side edge 212 that is away from the heat absorbing part 1) and the right side of the outer peripheral edge of the first sealing layer 22 is reasonably set. This effectively ensures that the gas can break through the connection between the first sealing layer 22 and the second sealing layer at the area of weakness 21 when the pressure inside the sealing part 2 reaches the predetermined threshold, so that the heat exchange device 100 can be used normally.

According to some examples of the present disclosure, referring to FIG. 2, the projection of the area of weakness 21 on the first sealing layer 22 is in the shape of a triangle. Therefore, the right end of the area of weakness 21 (i.e., the end of the area of weakness 21 that is away from the heat absorbing part 1) can be in the shape of a sharp angle, to ensure that the sharp angle receives a large force and the gas can easily break through the connection between the first sealing layer 22 and the second sealing layer at the area of weakness 21, and simplify the structure of the area of weakness 21 to reduce the production difficulty of the area of weakness 21, thereby improving the production rate of the heat exchange device 100.

Further, referring to FIG. 2, the projection of the area of weakness 21 on the first sealing layer 22 is in the shape of an equilateral triangle. By using such a configuration, because forces received by two equal sides in the equilateral triangle, i.e., the first side edge 211 and the second side edge 212, are even, it is more conducive for the gas to flow to the connection between the first side edge 211 and the second side edge 212, making it easier for the gas to break through the connection between the first sealing layer 22 and the second sealing layer at the area of weakness 21. In addition, the first side edge 211 and the second side edge 212 extend in a straight line, which simplifies the structure of the area of weakness 21 and is more conducive to the production and processing of the heat exchange device 100.

According to some examples of the present disclosure, the heat absorbing part 1 is a phase change material part. For example, the phase change material part can change the material state and provide latent heat without changing the temperature. In the process of changing the material state, the phase change material part can absorb or release a large amount of latent heat, so that the heat absorbing part 1 can absorb heat from the cell during the state change, thereby facilitating the long-term normal use of the battery assembly and prolonging the service life of the cell. It should be noted that the phase change material part may be a liquid-gas conversion phase change material part or a solid-gas conversion phase change material part to better meet practical applications.

Further, the phase change material part is a hydrogel or water. For example, when the phase change material part is the hydrogel, the hydrogel can swell and retain a large amount of water. With the use of the hydrogel as a heat-absorbing material, the water retained by the hydrogel can be used to take away a large amount of heat generated inside the cell during the heating and vaporization process, so that the phase change material part can absorb the heat of the cell and cool the cell. When the phase change material part is water, it has no fixed shape, making it easy to adapt to different usage conditions, thereby expanding the applicability of the phase change material part.

Optionally, the sealing part 2 is of a polymer material, and the outer peripheral edge of the first sealing layer 22 and the outer peripheral edge of the second sealing layer are sealed by hot pressing. As a result, the polymer has insulation, heat resistance, and corrosion resistance properties, and is easy to process, thereby prolonging the service life of the sealing part 2, reducing the processing difficulty of the sealing part 2, and reducing the processing costs of the sealing part 2. Furthermore, the hot-pressing sealing operation is simple, so the production rate of the heat exchange device 100 can be improved.

Optionally, a plurality of area of weaknesses 21 may be provided on the heat exchange device 100. In the description of the present disclosure, "multiple" and "a plurality of" mean two or more. In this way, the number of area of weaknesses 21 to be provided can be selected according to an actual situation, thereby improving the usage performance of the heat exchange device 100. It should be noted that the number and arrangement mode of the plurality of area of weaknesses 21 may be set according to an actual usage situation.

A battery assembly (not shown) according to an example of a second aspect of the present disclosure includes a plurality of cells (not shown) and at least one heat exchange device 100. The plurality of cells are arranged in sequence. The heat exchange device 100 is the heat exchange device 100 according to the example of the first aspect of the present disclosure. The heat exchange device 100 is arranged between two adjacent cells. For example, a plurality of heat exchange devices 100 are provided, the plurality of cells are arranged in sequence in a thickness direction of the cells, and one heat exchange device 100 is arranged between every two adjacent cells. By such a configuration, when the temperature of the cell increases, the heat exchange device 100 can absorb the heat of the cell to lower the temperature of the cell, thereby facilitating the long-term normal use of the cell and prolonging the service life of the battery assembly.

According to some examples of the present disclosure, the area of weakness 21 of the heat exchange device 100 is close to a side of the cell provided with an explosion-proof valve (not shown). For example, the side of the heat exchange device 100 on which the area of weakness 21 is located is on the same side as the side of the cell on which the explosion-proof valve is located. In this way, the position of the area of weakness 21 is reasonably arranged, to facilitate the gas discharge of the battery assembly and therefore facilitate the normal use of the battery assembly. In addition, in the process of assembling the battery assembly, a mounting direction of the heat exchange device 100 is easy to distinguish, thereby improving the mounting efficiency of the heat exchange device 100 and the cell and improving the mounting efficiency of the battery assembly.

A battery pack (not shown) according to an example of a third aspect of the present disclosure includes the heat exchange device 100 according to the example of the first aspect of the present disclosure or the battery assembly according to the example of the second aspect of the present disclosure.

According to the battery pack of the present disclosure, the heat exchange device 100 or the battery assembly is used to lower the temperature of the battery pack and dissipate heat of the battery pack, thereby prolonging the service life of the battery pack.

An electrical system (not shown) according to an example of a fourth aspect of the present disclosure includes the battery pack according to the example of the third aspect of the present disclosure.

According to the electrical system of the present disclosure, the battery pack is used to improve the usage performance of the electrical system. For example, the electrical system may be a vehicle, an aircraft, a ship, a computer, or an energy storage device. However, the present disclosure is not limited thereto.

Other configurations and operations of the battery assembly, the battery pack, and the electrical system according to the examples of the disclosure are known to those of ordinary skill in the art, and are not described in detail herein again.

In the description of the present disclosure, it should be understood that orientation or position relationships indicated by the terms such as "center", "length", "width", "thickness", "on", "below", "left", "right", "inner", "outer", and "circumferential" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

In the description of the specification, the description with reference to the terms such as "an example", "some examples", "exemplary examples", "example", "specific example", and "some example" mean that specific features, structures, or characteristics described in connection with the example or example are embraced in at least one example or example of the present disclosure. In this specification, exemplary descriptions of the foregoing terms do not necessarily refer to the same example or example.

Although the examples of the present disclosure have been shown and described, a person of ordinary skill in the art should understand that various changes, modifications, replacements and variations may be made to the examples without departing from the principles and spirit of the present disclosure, and the scope of the present disclosure is as defined by the appended claims and their equivalents.

## Claims

1. A heat exchange device, comprising:
a heat absorbing part; and
a sealing part, wrapped outside the heat absorbing part, the sealing part having at least one area of weakness, the sealing part being configured to break at a position on the sealing part that is close to the area of weakness when pressure inside the sealing part reaches a preset threshold, and an area of one side of the area of weakness that is close to the heat absorbing part being larger than an area of one side of the area of weakness that is away from the heat absorbing part.

2. The heat exchange device according to claim 1, wherein the sealing part comprises:
a first sealing layer; and
a second sealing layer, arranged on one side of the first sealing layer in a thickness direction, wherein an outer peripheral edge of the second sealing layer is connected to an outer peripheral edge of the first sealing layer to form an accommodating cavity, the heat absorbing part is located in the accommodating cavity, and the area of weakness is defined by the outer peripheral edge of the second sealing layer and the outer peripheral edge of the first sealing layer.

3. The heat exchange device according to claim 2, wherein the area of weakness is in communication with the accommodating cavity; or
the area of weakness is separated from the accommodating cavity, and a connection force between the outer peripheral edge of the first sealing layer and the outer peripheral edge of the second sealing layer on a side of the area of weakness facing the heat absorbing part is less than a connection force between the outer peripheral edge of the first sealing layer and the outer peripheral edge of the second sealing layer at remaining portions other than the area of weakness.

4. The heat exchange device according to claim 2, wherein the side of the area of weakness that is close to the heat absorbing part is open and is in communication with the accommodating cavity.

5. The heat exchange device according to claim 2, wherein a connection width between the outer peripheral edge of the second sealing layer and the outer peripheral edge of the first sealing layer at remaining portions other than the area of weakness is defined as *a*, and a minimum distance between the side of the area of weakness that is away from the heat absorbing part and an outer peripheral edge of the sealing part is defined as *b,* wherein b satisfies: 0.2*a*<*b*<0.8*a.*

6. The heat exchange device according to claim 2, wherein a connection width between the outer peripheral edge of the second sealing layer and the outer peripheral edge of the first sealing layer at remaining portions other than the area of weakness is defined as *a*, wherein *a* satisfies: 2 mm≤*a*≤10 mm.

7. The heat exchange device according to claim 2, wherein a projection of the area of weakness on the first sealing layer has a first side edge and a second side edge, and a distance between the first side edge and the second side edge gradually decreases from the side of the area of weakness that is close to the heat absorbing part toward the side of the area of weakness that is away from the heat absorbing part.

8. The heat exchange device according to claim 7, wherein one end of the first side edge that is away from the heat absorbing part is connected to one end of the second side edge that is away from the heat absorbing part.

9. The heat exchange device according to claim 7, wherein an inclination angle of the first side edge relative to a corresponding edge of the sealing part is defined as α, wherein α satisfies: 5°≤α≤60°; and/or
an inclination angle of the second side edge relative to the corresponding edge of the sealing part is defined as β, wherein β satisfies: 5°≤β≤60°.

10. The heat exchange device according to claim 2, wherein the projection of the area of weakness on the first sealing layer is in the shape of a triangle.

11. The heat exchange device according to claim 2, wherein the projection of the area of weakness on the first sealing layer is in the shape of an equilateral triangle.

12. The heat exchange device according to any one of claims 1 to 11, wherein the heat absorbing part is a phase change material part, preferably wherein the phase change material part is hydrogel or water.

13. A battery assembly, comprising:
a plurality of cells arranged in sequence; and
at least one heat exchange device, the heat exchange device being the heat exchange device according to any one of claims 1 to 12, and the heat exchange device being arranged between two adjacent cells, preferably wherein the area of weakness of the heat exchange device is close to a side of the cell and provided with an explosion-proof valve.

14. A battery pack, comprising the heat exchange device according to any one of claims 1 to 12 or the battery assembly according to claim 13.

15. An electrical system, comprising: the battery pack according to claim 14.
